# FASCICULE DE BREVET EUROPEEN

(11) **EP 1 263 569 B1**
(45) Date de publication et mention de la délivrance du brevet: **26.11.2003**
(21) Numéro de dépôt: 01917170.1
(22) Date de dépôt: 16.03.2001
(51) Int. Cl.: B29D 23/20, B29C 45/36, B65D 35/08

(54) **TUBE SOUPLE, RESISTANT A LA FISSURATION SOUS CONTRAINTE ET IMPERMEABLE A LA VAPEUR D'EAU**
FLEXIBLER BEHÄLTER, SPANNUNGSRISSBESTÄNDIG UND WASSERDAMPFUNDURCHLÄSSIG
FLEXIBLE TUBE, RESISTANT TO STRESS CRACKING AND IMPERMEABLE TO WATER VAPOUR

(30) Priorité: 17.03.2000 FR 0003469
(43) Date de publication de la demande: 11.12.2002
(73) Titulaire: CEP Industrie, 63550 Saint Rémy sur Durolle (FR)
(72) Inventeur: DAMBRICOURT, Géry, F-63300 Escoutoux (FR)
(74) Mandataire: Berger, Helmut
(86) Numéro de dépôt international: FR0100800
(87) Numéro de publication internationale: WO01068355

(56) Documents cités:
- EP-A- 0 595 220
- EP-A- 0 856 554
- FR-A- 2 764 230
- US-A- 4 959 005
- US-A- 5 174 941

## Description

L'invention a pour objet un emballage, en particulier un tube souple, résistant à la fissuration sous contrainte et imperméable à la vapeur d'eau.

Les corps pâteux, tels que les pâtes dentifrice, les produits pharmaceutiques, les produits de cosmétologie, les produits alimentaires, les produits d'hygiène, les dentifrices, les produits de nettoyage, les corps gras, les graisses, les mastics et les colles sont souvent proposés dans des emballages du type tube. Ces tubes sont constitués d'un corps tubulaire de section constante, de forme circulaire, ovale ou autre. Le corps tubulaire, formant ce que l'on appelle dans ce qui suit la "jupe", a une première extrémité fermée généralement par thermosoudage et une seconde extrémité opposée configurée de façon à constituer une tête de distribution des produits contenus dans la jupe. La tête de distribution est munie d'un obturateur vissé, encliqueté ou autre, de type capsule standard, capsule de service ou autre.

Pour extraire le produit du tube, le consommateur presse la paroi de la jupe, qui subit des déformations et des pliures, de plus en plus marquées, au fur et à mesure du vidage du tube.

La jupe du tube doit donc être réalisée en un matériau souple. Ce matériau doit également être soudable thermiquement. Il doit également présenter des caractéristiques de résistance à la fissuration sous contrainte et d'imperméabilité à la vapeur d'eau pour répondre aux cahiers des charges de compatibilité des produits destinés à être conditionnés dans le tube.

A l'heure actuelle, les tubes répondant à tous ces critères sont fabriqués le plus souvent par assemblage ou surmoulage de la tête de distribution réalisée par injection et de la jupe réalisée par extrusion. Un autre procédé, peu utilisé et coûteux, consiste à former la jupe par déplacement de l'empreinte consécutivement à l'injection de la tête, procédé dit d'injection soufflage.

EP 0 856 554-A décrit un conditionnement injecté à résistance améliorée au stress cracking comportant une paroi constituée d'un mélange thermoplastique comprenant un premier copolymère d'éthylène-oléfine en C₄ à C₅ et un second copolymère d'éthylène-oléfine en C₆ à C₁₀. Il est précisé dans ce document que le mélange de ces deux copolymères doit avoir un indice de fluidité (norme ISO 1133) élevé, de l'ordre de 10g/10 mn, pour être adapté au moulage par injection d'objets à paroi de faible épaisseur, d'où l'utilisation dans le mélange d'un copolymère d'éthylène-oléfine en C₄ à C₅ de MFI compris entre 10 et 20g/10 mn, qui est un matériau non résistant à la fissuration sous contrainte selon le cahier des charges généralement demandé. Par ailleurs, ce document est muet quant aux propriétés de souplesse du tube en fonction de l'épaisseur de la paroi et quant aux propriétés d'imperméabilité à la vapeur d'eau de la paroi.

Dans ce contexte, l'invention vise à fournir un tube réalisé par le procédé de l'injection simultanément souple, résistant à la fissuration sous contrainte et imperméable à l'eau, alors que ces caractéristiques sont incompatibles avec le procédé de l'injection selon l'art antérieur lorsqu'elles sont exigées simultanément.

A cet effet, l'invention propose un tube constitué d'une jupe et d'une tête de distribution caractérisé en ce que sa paroi est en un copolymère d'éthylène-oléfine linéaire en C_{4 à 10} ou en un mélange de copolymères d'éthylène-oléfine linéaire en C_{4 à 10} ayant un indice de fluidité (MFI) mesuré selon la norme ISO 1133 compris entre 3 et 10 g/10 mn inclus, de préférence compris entre 3,5 et 9g/10 mn inclus et une densité comprise entre 0,880 g/cm³ et 0,935 g/cm³ inclus, de préférence comprise entre 0,900 et 0,930 g/cm³ indus, en ce que la jupe a une épaisseur de paroi à mi-hauteur comprise entre 0.30 et 1,00 mm inclus, de préférence entre 0,35 et 0,95 mm inclus pour une longueur comprise entre 40 et 200 mm inclus, et en ce que la tête et la jupe sont fabriquées en une seule opération d'injection dans un moule, pour obtenir un tube souple, résistant à la fissuration sous contrainte et imperméable à la vapeur d'eau.

Dans un mode de réalisation préféré de l'invention, le mélange de copolymères d'éthylène-oléfine linéaire en C_{4 à 10} est soit un mélange de copolymères d'éthylène-oléfine linéaire en C_{4 à 5} soit un mélange de copolymères d'éthylène-oléfine linéaire en C_{6 à 10}

Selon un mode de réalisation particulièrement préféré, le(s) copolymère(s) d'éthylène-oléfine linéaire en C_{4 à 10} est(sont) un(des) copolymère(s) d' éthylène-octène.

De préférence, le moule d'injection du tube comprend une empreinte 5 et un noyau 4 qui comprend une partie centrale 8 dont l'extrémité supérieure libre 9 comporte des canaux d'alimentation 10 et est en appui de centrage sur l'empreinte 5 pendant la phase d'injection du tube.

Dans un mode de réalisation préféré, ladite extrémité 9 est en forme de cône rentrant et les angles α entre les canaux 10 et l'axe vertical de l'empreinte 5 sont inférieurs à 90°.

Dans un mode de réalisation avantageux les largeurs cumulées des canaux 10 à leurs zones de raccord A avec l'embout de la tête du tube représentent au moins 15%, de préférence plus de 25%, du périmètre de cet embout.

Plus avantageusement encore, les canaux 10 ont une largeur qui croît depuis le point d'injection 13 suivant une direction radiale centrifuge jusqu'à leurs points de raccord A avec l'embout de la tête du tube.

Le plus avantageusement, l'embout de la tête de distribution a une zone d'étranglement annulaire au delà de la zone de raccord A des canaux 10 avec l'embout de la tête du tube.

Dans l'hypothèse où l'on ne souhaite pas rapporter un embout sur le tube, mais réaliser simplement un tube d'une seule pièce, embout inclus, la partie centrale 8 du noyau du moule d'injection est mobile et la paroi supérieure 6 de l'embout de la tête du tube est injectée après recul de la partie mobile, d'une distance déterminée en fonction de l'épaisseur de paroi voulue.

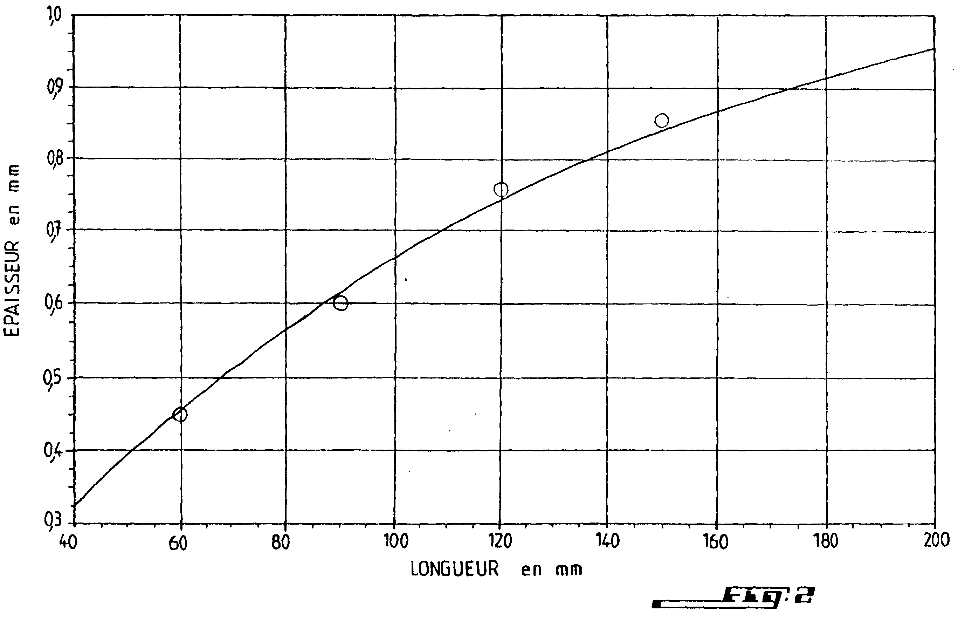

Pour ce qui concerne les matériaux, on choisira un indice de fluidité du copolymère ou du mélange de copolymères d'éthylène-oléfine en C_{4 à 10} compris entre 5 et 10 g/10 mn inclus, de préférence entre 5 et 9 g/10 mn inclus et une épaisseur de la paroi à mi-hauteur de la jupe située sur la courbe représentée en figure 2, en fonction de la longueur de la jupe à + ou - 0,05 mm près, pour obtenir un tube à souplesse améliorée.

On sélectionnera l'indice de fluidité du copolymère ou du mélange de copolymères d'éthylène-oléfine en C_{4 à 10} entre 3 et 6,5 g/10 mn inclus, de préférence entre 3,5 et 6,5 g/10 mn inclus, et une épaisseur de la paroi à mi-hauteur de la jupe sur la courbe représentée en figure 3, en fonction de la longueur de la jupe à + ou - 0,05 mm près, pour obtenir un tube à résistance à la fissuration sous contrainte améliorée, en particulier en présence de produits tensio-actifs.

Dans ces cas, de préférence, la densité du copolymère ou du mélange de copolymères d'éthylène-oléfine linéaire en C_{4 à} 10 est comprise entre 0,880 et 0,920 g/cm³ inclus, de préférence comprise entre 0,900 et 0,920 g/cm³ inclus, pour obtenir un tube à souplesse améliorée.

Cela est plus particulièrement approprié lorsque la jupe a une longueur supérieure ou égale à 75mm.

Encore plus préférablement, l'indice de fluidité du copolymère ou du mélange de copolymères d'éthylène-oléfine linéaire en C_{4 à 10} est compris entre 5 et 10 g/10 mn, de préférence compris entre 5 et 9 g/10 mn inclus et la densité du copolymère ou du mélange de copolymères d'éthylène-oléfine linéaire en C_{4 à 10} est comprise entre 0,900 et 0,920 g/cm³ inclus.

Le plus avantageusement, la paroi du tube est en un copolymère d'éthylène-octène ayant un indice de fluidité compris entre 5 et 6 g/10 mn inclus et une densité égale à 0,919 g/cm³.

Selon un autre mode de réalisation, la densité du copolymère ou du mélange de copolymères d'éthylène-oléfine linéaire en C_{4 à 10} est comprise entre 0,925 et 0,935 g/cm³ inclus pour une épaisseur de la paroi à mi-hauteur de la jupe voisine de 0,45 mm, entre 0,920 et 0,930 g/cm³ inclus pour une épaisseur de la paroi à mi-hauteur de la jupe voisine de 0,60 mm, entre 0,915 et 0,925 g/cm³ inclus pour une épaisseur de la paroi à mi-hauteur de la jupe voisine de 0,75 mm, pour obtenir un tube à imperméabilité à la vapeur d'eau renforcée.

Dans ce cas on préfère une paroi en un mélange de : a) 33% à 67% en poids, par rapport au poids total du mélange, d'un copolymère d'éthylène-oléfine linéaire en C_{4 à 10} ayant une densité comprise entre 0,900 et 0,920 g/cm³ inclus, et 67% à 33% en poids par rapport au poids total du mélange, d'un copolymère d'éthylène-oléfine linéaire en C_{4 à 10} ayant une densité comprise entre 0,920 et 0,935 g/cm³ inclus, pour obtenir un tube à imperméabilité à la vapeur d'eau renforcée et à souplesse optimisée en fonction de l'épaisseur de la paroi à mi-hauteur de la jupe.

De préférence, la paroi est en un mélange de : a) 33% à 67% en poids, par rapport au poids total du mélange, d'un copolymère d'éthylène-octène ayant un indice de fluidité compris entre 3 et 6,5 g/10 mn inclus et une densité comprise entre 0,900 et 0,920 g/cm³ inclus, et b) 67% à 33% en poids par rapport au poids total du mélange, d'un copolymère d'éthylène-octène ayant un indice de fluidité compris entre 3 et 6,5 g/10 mn et une densité comprise entre 0,920 et 0,935 g/cm³ inclus, pour obtenir un tube à imperméabilité à la vapeur d'eau renforcée et souplesse optimisée en fonction de l'épaisseur de la paroi à mi-hauteur et de la longueur, de la jupe.

Plus préférablement, la paroi est en un mélange de : a) 33% à 67% en poids, par rapport au poids total du mélange, d'un copolymère d'éthylène-octène ayant un indice de fluidité compris entre 5 et 6 et une densité égale à 0,919g/cm³, et b) 67% à 33% en poids par rapport au poids total du mélange, d'un copolymère d'éthylène-octène ayant un indice de fluidité compris entre 3 et 4 g/10 mn et une densité égale à 0,935g/cm³.

Le plus préférablement, chaque copolymère d'éthylène-octène représente 50% en poids dudit mélange.

Dans toujours un autre mode de réalisation, le tube a une paroi en un mélange de : a) 33% à 67% en poids, par rapport au poids total du mélange, d'un copolymère d'éthylène-octène ayant un indice de fluidité compris entre 3 et 5 g/10 mn et une densité égale à 0,915g/cm³, et b) 67% à 33% en poids par rapport au poids total du mélange, d'un copolymère d'éthylène-octène ayant un indice de fluidité compris entre 3 et 4 g/10 mn et une densité égale à 0,935g/cm³ pour optimiser la résistance à la fissuration sous contrainte et d'imperméabilité à l'eau au prix d'une moindre souplesse de la paroi du tube.

L'invention sera mieux comprise et d'autres buts et avantages de celle-ci apparaîtront plus clairement à la lecture de la description explicative qui suit et qui est faite en référence aux figures annexées dans lesquelles :
La figure 1 représente schématiquement les zones de sélection des indices de fluidité et des densités du copolymère ou du mélange de copolymères d'éthylène-oléfine linéaire en C_{4 à 10} selon les propriétés particulières souhaitées du tube obtenu.
La figure 2 représente, sous forme de courbe, les épaisseurs de la paroi de la jupe à mi-hauteur de la jupe à choisir en fonction de la longueur voulue de la jupe,lorsque la paroi du tube est en un copolymère ou mélange de copolymères d'éthylène-oléfine linéaire en C_{4 à 10} ayant compris entre 5 et 10 g/10 mn inclus, de préférence entre 5 et 9 g/10 mn inclus, pour obtenir un tube à souplesse améliorée.
La figure 3 représente, sous forme de courbe, les épaisseurs de la paroi de la jupe à mi-hauteur de la jupe à choisir en fonction de la longueur voulue de la jupe, lorsque la paroi du tube est en un copolymère ou mélange de copolymères d'éthylène-oléfine linéaire en C_{4 à 10} ayant compris entre 3 et 6,5 g/10 mn inclus, de préférence entre 3,5 et 6,5 g/10 mn inclus, pour obtenir un tube à résistance à la fissuration sous contrainte améliorée, en particulier en présence de produits tensio-actifs.
La figure 4 représente un moule de l'art antérieur utilisable pour l'injection du tube selon l'invention.
La figure 5 représente un moule de l'art antérieur utilisé de préférence pour l'injection du tube de l'invention.
La figure 6 représente schématiquement les nappes d'écoulement lors de l'injection du tube de l'invention avec le moule représenté en figure 5.
La figure 7 est une vue agrandie de la partie notée VII dans la figure 5.
La figure 8 représente schématiquement une vue en perspective de la tête du moule à utiliser le plus préférablement pour l'injection du tube de l'invention.
La figure 9 est une vue en coupe selon l'axe IX-IX de la figure 8.
La figure 10 est une vue de dessus de la partie supérieure 9 de la partie mobile du moule représenté en figure 7.

D'une manière générale, les tubes sont constitués d'une jupe, de section constante, de forme circulaire, ovale ou autre, fermée à une de ses extrémités par thermosoudage, après remplissage du tube avec le produit pâteux à conditionner. A l'autre extrémité, le tube est configuré de façon à constituer une tête de distribution du produit contenu dans la jupe.

La contenance du tube est sa caractéristique première. Dans le cas particulier d'un tube de section circulaire constante, la contenance est définie par la longueur et le diamètre de la jupe, c'est-à-dire par la longueur et le diamètre de la section circulaire de la jupe.

Les contenances usuellement proposées sur le marché sont comprises entre 2 et 500 ml. Les rapports des longueurs de jupe par rapport au diamètre des jupes habituellement constatés sur le marché sont compris entre 2,5 et 6, de préférence 4.

L'invention s'applique de préférence aux formats en vigueur sur le marché, et respecte donc un rapport de longueur de jupe par rapport au diamètre compris entre 2,5 et 6, de préférence 4.

Selon la contenance du tube, et selon le rapport longueur de jupe/diamètre du tube, la longueur de la jupe est donc comprise entre 40 et 200 mm.

La jupe du tube doit être simultanément résistante à la fissuration sous contrainte, imperméable à la vapeur d'eau et souple.

La fissuration sous contrainte ou "stress-cracking" est un phénomène d'attaque physico-chimique d'un produit tensio-actif sur un polymère. Ce phénomène se traduit par la formation de micro-fissures dans le polymère pouvant aller jusqu'à l'éclatement de la paroi. Le risque d'éclatement est particulièrement important au voisinage de l'extrémité thermosoudée.

Les produits contenus dans le tube sont plus ou moins chargés en produits tensio-actifs et peuvent donc provoquer la fissuration ou l'éclatement de l'enveloppe.

Afin de caractériser la résistance du matériau au stress-cracking, les tubes obtenus sont testés de la façon suivante :

Le tube est rempli d'une solution tensio-active à 0,3 %, par exemple, d'IGEPAL CO 630 ou de NONYLPHENOL ETHOXYLE dans de l'eau distillée, et soudé à une extrémité par pincement à chaud. Le tube est placé dans une étuve à 55°C pendant 24 heures. En sortie d'étuve, on applique une pression de 2 bars à 4,5 bars pendant 2 à 10 secondes, conformément au cahier des charges du donneur d'ordre. A la sortie de l'étuve, le tube ne doit présenter aucune fuite à la soudure, ni aucune fissure ou déchirure de la paroi.

Les produits contenus dans l'enveloppe souple sont également plus ou moins chargés en eau.

A l'heure actuelle, en particulier en cosmétologie, les produits conditionnés évoluent vers des émulsions à base aqueuse. Le conditionnement de ces produits doit donc répondre à des critères d'imperméabilité à la vapeur d'eau de plus en plus sévères afin d'éviter une trop forte perte de poids par évaporation de l'eau à travers la paroi souple, et par vole de conséquence une modification du caractère "pateux" de la crème conditionnée dans le tube. Par ailleurs, la mesure de la perméabilité à l'eau est toujours effectuée en pourcentage de la perte de poids de la crème par évaporation, par rapport au poids initial de crème contenu dans le tube. Le ratio de perte de poids dépend donc simultanément de la porosité à l'eau de la paroi et du rapport entre la surface d'évaporation, c'est à-dire la surface de la jupe, et le volume de crème contenu dans le tube.

Le test d'imperméabilité à l'eau consiste à placer les tubes, préalablement remplis du produit à tester et soudés, dans une étuve dont la température est comprise. "selon les tests, entre 45° et 55°C, pendant une période de temps comprise, selon les tests, entre 2 semaines et 8 semaines.

Selon la nature de la crème, la dimension du tube, le volume de crème contenu dans le tube et l'exigence d'effet barrière du cahier des charges, la perte de poids doit être inférieure à 2%, 3%, 5% ou 8% dans l'hypothèse la moins contraignante.

A titre d'exempte, une perte de poids de 3 % pour une quantité de crème de 5 grammes dans un tube de diamètre 19 représente une évaporation de 0.15 grammes d'eau. Ceci est donc un test extrêmement contraignant dans l'hypothèse d'une exposition du tube dans une étuve à 45°C pendant 8 semaines.

De façon générale la difficulté du test augmente avec la diminution de la taille du tube : plus la contenance du tube est faible, plus le ratio de surface d'évaporation constitué par la jupe par rapport au volume de crème contenu augmente.

Pour la même raison, la difficulté du test augmente lorsque le tube n'est que partiellement rempli, ce qui contribue également à augmenter le ratio de surface d'évaporation par rapport au volume de crème.

En résumé, l'évaporation étant proportionnelle à la surface de la jupe, la perte de poids est proportionnellement plus importante pour les tubes de petite contenance, de plus partiellement remplis.

Enfin, la jupe du tube doit être souple pour permettre l'évacuation des produits du type pâteux contenus dans celui-ci, par simple pression de l'utilisateur sur la paroi.

La souplesse de la paroi est inversement proportionnelle à son épaisseur et à la densité du matériau thermoplastique.

Dans le procédé traditionnel de l'extrusion, le matériau est extrudé à travers la filière en régime thermodynamique stabilisé, la jupe tubulaire étant définitivement formée au sortir de la filière et avançant au rythme de sa formation au sortir de la filière. Cette technologie permet donc de mettre en oeuvre des matériaux extrêmement visqueux, de MFI inférieur à 1 ou voisin de 1 g/10 mn, très résistants à la fissuration sous contrainte, dans des épaisseurs de paroi faibles, par exemple comprises entre 0,30 et 0,50 mm, ce qui permet corrélativement d'utiliser des matériaux de densité élevée, par exemple voisine de 0,950 g/cm³, fortement barrières à la vapeur d'eau, tout en conservant une souplesse de paroi acceptable du fait de leur faible épaisseur.

Au contraire dans le procédé de l'injection, l'épaisseur de la paroi est une fonction de la longueur de la jupe. En effet, le matériau doit, en sortie du point d'injection du matériau, parcourir à l'intérieur du moule le chemin permettant d'assurer le remplissage du moule. Pendant cette phase de parcours à l'intérieur du moule refroidi, la matière change d'état (rhéologie à l'état fondu) et peut être dégradée par le dépassement de sa vitesse limite de cisaillement ou de sa température limite, si le matériau est trop visqueux, si la paroi est trop mince ou si la longueur d'acheminement dans le moule (longueur de la jupe) est trop longue.

Pour obtenir une résistance à la fissuration sous contrainte conforme aux cahiers des charges de la compatibilité il faut utiliser des matériaux visqueux (faible en indice de fluidité) et donc augmenter l'épaisseur de la paroi pour rendre le matériau injectable, ce qui contribue à rigidifier cette paroi.

Par ailleurs, la densité du copolymère est sans influence significative sur l'injectabilité mais a une influence déterminante sur la souplesse de la paroi. A titre d'exemple deux copolymères d'éthylène-octène de même grade (par exemple 6) forment une paroi rigide pour une densité de 0,950 g/cm³ et très souple pour une densité de 0,900 g/cm³, si cette paroi a une épaisseur de 0,6 mm.

On comprend donc qu'il y a une contradiction entre le procédé de l'injection qui exige soit la mise en oeuvre de matériaux fluides ayant un MFI égal à 10 g/10 mn ou plus, non résistants, ou faiblement résistants à la fissuration sous contrainte, soit l'utilisation de parois épaisses, épaisseur qui induit une rigidité inacceptable du tube si l'on utilise un matériau suffisamment dense pour assurer l'imperméabilité à l'eau du tube.

A l'heure actuelle, on ne connaît pas de matériau et de procédé permettant l'injection de ce matériau pour former un tube, sauf à dégrader ce matériau de façon irrémédiable par dépassement de sa vitesse limite de cisaillement et/ou par dépassement de sa température limite pendant l'injection, si on impose que la paroi du tube soit simultanément souple, résistante à la fissuration sous contrainte et imperméable à l'eau pour une longueur de jupe comprise entre 40 et 200 mm.

L'invention a donc consisté à obtenir, par le procédé de l'injection, une paroi mince pour des longueurs de paroi de 40 à 200 mm et à formuler un matériau présentant simultanément de bonnes caractéristiques de souplesse, de résistance à la fissuration sous contrainte et d'imperméabilité à l'eau, l'épaisseur de paroi augmentant corrélativement à la longueur de la jupe, la paroi étant suffisamment épaisse pour autoriser l'injection de matériaux fortement visqueux garantissant la résistance à la fissuration sous contrainte, la densité des matériaux formulés garantissant l'imperméabilité à la vapeur d'eau de la paroi, la paroi conservant une souplesse acceptable compte-tenu de son épaisseur et de la densité du matériau formulé, le matériau étant injecté sans dégradation irrémédiable par dépassement de la vitesse limite de cisaillement ou dépassement de sa température limite lors de l'injection.

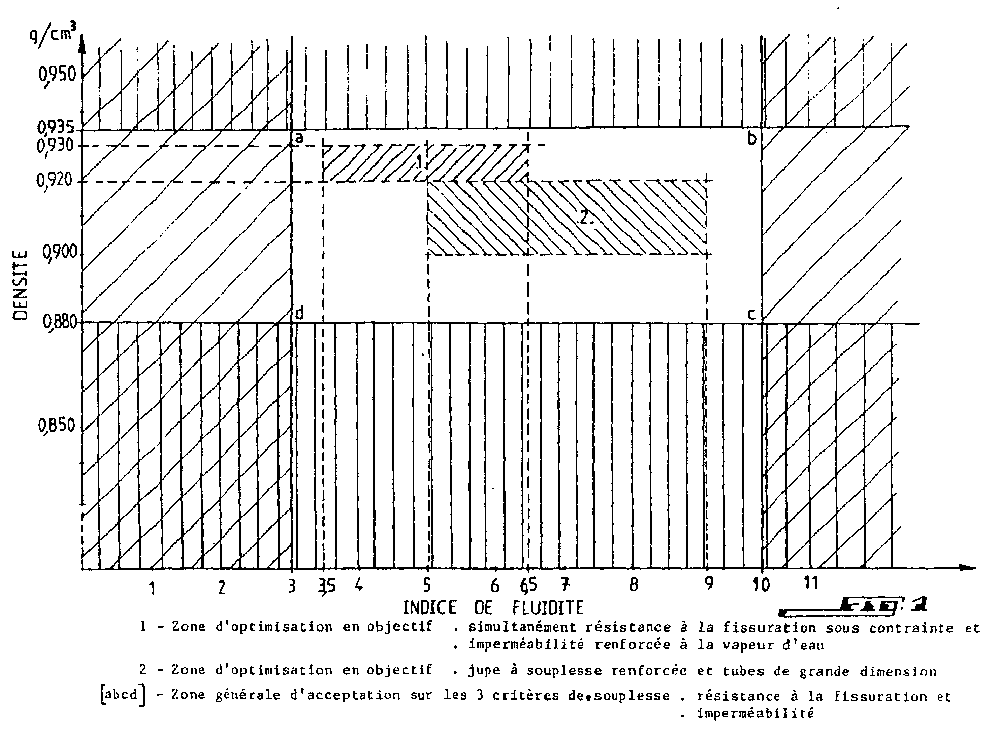

Contrairement aux préjugés de l'art antérieur, on a trouvé qu'un copolymère d'éthylène-oléfine linéaire en C₄ à C₁₀ ou un mélange de copolymères d'éthylène-oléfine en C₄ à C₁₀ ayant un indice de fluidité (MFI) mesuré selon la norme ISO 1133 compris entre 3 et 10 g/10 mn, de préférence compris entre 3,5 et 9 g/10 mn et une densité comprise entre 0,880 et 0,935 g/cm³, c'est-à-dire lorsque le copolymère ou le mélange de copolymères a un indice de fluidité et une densité compris dans la zone blanche notée [a, b, c, d] en figure 1, peut être injecté sans destruction par dépassement de la vitesse limite de cisaillement et/ou dépassement de la température limite, pour former un tube dont la jupe a une épaisseur de paroi comprise entre 0,30 et 1,0 mm, de préférence comprise entre 0,35 et 0,95 mm, avec une longueur de jupe comprise entre 40 et 200 mm.

En effet, et comme illustré en figure 1, lorsque le MFI du copolymère ou du mélange de copolymères d'éthylène-oléfine linéaire en C_{4 à 10} est inférieur à 3, le matériau n'est plus injectable en raison du dépassement de la vitesse limite de cisaillement dans le parcours d'écoulement (rapport longueur/épaisseur) de la jupe imposé pour préserver la souplesse du tube. De la même façon, lorsque le MFI du copolymère ou du mélange de copolymères d'éthylène-oléfine linéaire en C₄ à C₁₀ est supérieur à 10, le tube obtenu n'a pas une résistance à la fissuration sous contrainte acceptable.

De la même façon, lorsque le copolymère ou le mélange de copolymères d'éthylène-oléfine linéaire en C₄ à C₁₀ a une densité inférieure à 0,880 g/cm³, le tube obtenu a une perméabilité à la vapeur d'eau excessive. Et si le copolymère ou le mélange de copolymères d'éthylène-oléfine linéaire en C₄ à C₁₀ a une densité supérieure à 0,935 g/cm³, la rigidité du tube obtenu devient excessive, pour une épaisseur de poids comprise entre 0,30 et 1,00 mm, de préférence comprise entre 0,35 et 0,95 mm imposée pour rendre le matériau injectable.

Autrement dit, pour obtenir un tube pouvant être fabriqué par le procédé de l'injection, en une seule opération d'injection et présentant une perméabilité à la vapeur d'eau et une résistance à la fissuration sous contrainte, conformes aux cahiers des charges précédemment définis, une souplesse permettant l'évacuation du produit par simple pression de l'utilisateur et une soudabilité par les moyens dits "air chaud" ou "pince chauffante" actuellement utilisés, le tube doit être constitué d'un copolymère d'éthylène-oléfine linéaire en C₄ à C₁₀ ou d'un mélange de copolymères d'éthylène-oléfine linéaire en C₄ à C₁₀, ayant un indice de fluidité compris entre 3 et 10 g/10 mn inclus et une densité comprise entre 0,880 et 0,935 g/cm³. De préférence, le copolymère d'éthylène-oléfine linéaire en C₄ à C₁₀ ou le mélange de copolymères d'éthylène-oléfine linéaire en C₄ à C₁₀ a un indice de fluidité compris entre 3,5 et 9 g/10 mn inclus et une densité comprise entre 0,900 et 0,930 inclus.

Lorsqu'on utilise un mélange de copolymères, il est préférable d'utiliser soit un mélange de copolymères d'éthylène-oléfine linéaire en C₄ à C₅, soit un mélange de copolymères d'éthylène-oléfine linéaire en C₆ à C₁₀. En effet, on évite ainsi des mélanges hétérogènes du point de vue de la structure moléculaire qui peuvent donner des tubes injectés non homogènes du point de vue de la composition chimique et donc non conformes aux caractéristiques désirées du mélange.

A cet égard, on choisira préférablement des mélanges de copolymères d'éthylène-oléfine linéaire ayant le même nombre de carbone dans l'oléfine, lorsque le matériau est composé d'un mélange de deux copolymères.

Le plus préférablement, pour un indice de fluidité défini, on choisira un copolymère ou un mélange de copolymères dont la molécule dispose d'un nombre de carbone élevé, ce qui contribue à améliorer la résistance à la fissuration sous contrainte.

De plus, en sélectionnant l'indice de fluidité du matériau, sa densité, et également l'épaisseur de la paroi, on peut fabriquer des tubes ayant des propriétés particulières telles qu'une souplesse plus élevée, une imperméabilité à la vapeur d'eau particulièrement élevée, une résistance à la fissuration sous contrainte améliorée, en fonction de la nature de la crème, de la dimension du tube, de son taux de remplissage et du cahier des charges de la compatibilité.

Bien entendu, l'épaisseur de la paroi est à moduler en fonction de la longueur de la jupe car le tube est à fabriquer par le procédé de l'injection, en une seule opération.

L'épaisseur de la paroi à laquelle on se réfère ici est l'épaisseur moyenne de la paroi tout au long de la longueur de la jupe de cette paroi. Par convention, cette épaisseur moyenne est mesurée à mi-hauteur de la jupe du tube obtenu.

Ainsi, dans le but d'optimiser la souplesse de la paroi, en diminuant son épaisseur, on formule un copolymère d'éthylène-oléfine linéaire en C₄ à C₁₀ ou un mélange de copolymères d'éthylène-oléfine linéaire en C₄ à C₁₀ ayant un indice de fluidité compris entre 5 et 10 g/10 mn inclus, de préférence entre 5 et 9 g/10 mn inclus.

L'épaisseur minimale de la paroi étant déterminée par la longueur de la jupe du tube et l'indice de fluidité du matériau utilisé, on a trouvé qu'avec le copolymère ou le mélange de copolymères d'éthylène-oléfine linéaire en C₄ à C₁₀, ayant un indice de fluidité compris entre 5 et 10 g/10 mn inclus, de préférence compris entre 5 et 9 g/10 mn inclus, c'est-à-dire ayant un indice de fluidité relativement élevé, l'épaisseur moyenne de la paroi de la jupe doit être choisie sur la courbe représentée en figure 2, en fonction de la longueur de jupe voulue. Ainsi, l'épaisseur moyenne de la jupe tant vers une limite inférieure voisine de :
- 0,45 mm pour une longueur de jupe voisine de 60 mm ;
- 0,60 mm pour une longueur de jupe voisine de 90 mm ;
- 0,75 mm pour une longueur de jupe voisine de 120 mm ;
- 0,85 mm pour une longueur de jupe voisine de 150 mm ; et
- 0,95 mm pour une longueur de jupe voisine de 200 mm.

Ce choix est particulièrement pertinent pour les tubes de grande dimension ou pour les matériaux de densité élevée, car il permet de minimiser la rigidité imposée, soit par l'épaisseur induite par le parcours d'écoulement, soit par la densité du matériau.

En revanche, dans l'hypothèse où l'on veut conditionner des crèmes contenant des agents fortement tensio-actifs ou dans l'hypothèse de tubes de faible contenance induisant des ratios élevés de perte de poids, on formulera de préférence un copolymère ou un mélange de copolymères d'éthylène-oléfine linéaire en C₄ à C₁₀ ayant un indice de fluidité compris entre 3 et 6,5 g/10 mn inclus, de préférence entre 3,5 et 6,5 g/10 mn inclus, ce qui oblige à augmenter l'épaisseur de la paroi. Dans ce cas, l'épaisseur moyenne de la paroi de la jupe doit être choisie sur la courbe représentée en figure 3, en fonction de la longueur de jupe voulue, pour optimiser la souplesse du tube. Ainsi, l'épaisseur moyenne de la jupe tendra vers une limite inférieure voisine de :
- 0,55 mm pour une longueur de jupe de 60 mm ;
- 0,70 mm pour une longueur de jupe de 90 mm ;
- 0,83 mm pour une longueur de jupe de 120 mm ;
- 0,90 mm pour une longueur de jupe de 150 mm ; et
- 1,00 pour une longueur de jupe de 200 mm.

Les valeurs d'épaisseur de paroi à mi-hauteur de la jupe sont données aussi bien dans les figures 2 et 3 que dans ce qui précède à ± 0.05 mm près.

Dans le but de disposer de tubes très souples, lorsque les contraintes d'imperméabilité sont faibles ou lorsque le ratio de surface d'évaporation par rapport au volume est favorable, par exemple pour les tubes dont la longueur de jupe est supérieure ou égale à 75 mm, on formulera un copolymère ou un mélange de copolymères d'éthylène-oléfine en C_{4 à 10} dont la densité sera comprise entre 0,880 et 0,920 g/cm³, de préférence comprise entre 0,900 et 0,920 g/cm³ inclus.

Le tube sera encore plus souple s'il est injecté en un copolymère ou un mélange de copolymères d'éthylène-oléfine linéaire en C_{4 à 10} dont le MFI est compris entre 5 et 10 g/10 mn inclus, de préférence compris entre 5 et 9 g/10 mn inclus et dont la densité est comprise entre 0,900 et 0,920 g/cm³ inclus, ce qui permet de choisir l'épaisseur de paroi minimale pour une longueur de jupe donnée.

Un exemple pratique particulièrement préféré de cette solution est un copolymère d'éthylène-octène ayant un indice de fluidité compris entre 5 et 6 inclus et une densité égale à 0,919 g/cm³, par exemple le DOWLEX 2035E.

A l'inverse, lorsque l'on veut optimiser la propriété d'imperméabilité à l'eau du tube produit, tout en conservant une souplesse acceptable, on choisira un copolymère ou un mélange de copolymères d'éthylène-oléfine linéaire en C₄ à C₁₀ ayant une densité comprise entre 0,925 et 0,935 g/cm³ inclus pour une épaisseur moyenne de paroi de la jupe voisine de 0,45 mm, comprise entre 0,920 et 0,930 g/cm³ inclus pour une épaisseur moyenne de paroi de la jupe voisine de 0,60 mm, ou comprise entre 0,915 et 0,925 g/cm³ inclus pour une épaisseur moyenne de paroi voisine de 0,75 mm.

Il convient en effet de diminuer la densité du matériau utilisé lorsqu'on augmente l'épaisseur de la paroi, si l'on souhaite conserver une souplesse constante de la paroi quelle que soit son épaisseur.

L'épaisseur de paroi étant corrélative à sa longueur, la perméabilité accrue d'une paroi de grande longueur réalisée dans un matériau de plus faible densité est compensée par l'amélioration du ratio de surface d'évaporation par rapport au volume de crème contenu résultant de l'augmentation de la taille du tube, et par l'épaississement de la paroi.

On obtient donc par ce moyen une souplesse de paroi constante et optimisée, le ratio de perte de poids de la crème contenue dans le tube étant également stabilisé, quelle que soit la dimension du tube.

L'application de l'invention est particulièrement pertinente pour les tubes fortement barrière à l'eau et donc à souplesse réduite.

Les caractéristiques d'indice de fluidité et de densité recherchées peuvent ne pas être obtenues en utilisant un copolymère d'éthylène-oléfine linéaire en C₄ à C₁₀ seul. Dans ce cas, on utilisera un mélange de copolymères d'éthylène-oléfine linéaire en C₄ à C₁₀ permettant d'obtenir les indices de fluidité et les densités optimaux en fonction des caractéristiques recherchées et de la dimension du tube.

Par exemple pour obtenir un tube à imperméabilité renforcée à la vapeur d'eau et à souplesse optimisée en fonction de la longueur et de l'épaisseur moyenne de la paroi de la jupe, on utilisera un mélange de 33% à 67% en poids, par rapport au poids total du mélange, d'un copolymère d'éthylène-oléfine linéaire en C₄ à C₁₀ de densité comprise entre 0,900 et 0,920 g/cm³ inclus et de 67% à 33% en poids par rapport au poids total du mélange, d'un copolymère d'éthylène-oléfine linéaire en C₄ à C₁₀ de densité comprise entre 0,920 et 0,935 g/cm³ inclus. La modulation de la composition du mélange permettant de moduler la densité et donc de stabiliser la souplesse de la paroi en fonction de son épaisseur, c'est-à-dire indirectement de la longueur de la jupe, la porosité accrue de la paroi étant compensée par l'amélioration du ratio de la surface d'évaporation par rapport au poids de crème contenue, comme précédemment exposé.

Plus précisément, pour obtenir un tube ayant simultanément une très bonne résistance à la fissuration sous contrainte et un très bon effet barrière à la vapeur d'eau, la souplesse étant optimisée en fonction de la longueur et de l'épaisseur moyenne de la paroi de la jupe, on utilisera de préférence un mélange de 33 % à 67 % en poids par rapport au poids total du mélange d'un copolymère d'éthylène-octène ayant un indice de fluidité compris entre 3 et 6,5 g/10 mn inclus et une densité comprise entre 0,900 et 0,920 g/cm³ inclus et de 67 % à 33 % en poids, par rapport au poids total du mélange, d'un copolymère d'éthylène-octène ayant un indice de fluidité compris entre 3 et 6,5 g/10 mn et une densité comprise entre 0,920 et 0,935 g/cm³ inclus, la modulation de la composition du mélange permettant de la même façon de stabiliser la souplesse en fonction de la paroi.

A titre d'exemple, l'effet recherché sera atteint en utilisant un mélange de 33% à 67% en poids par rapport au poids total de Dowlex 2035E d'indice de fluidité compris entre 5 et 6 g/10 mn et de densité égale à 0,919 g/cm³ et de 67% à 33% en poids par rapport au poids total de Dowlex NG 2429, d'indice de fluidité compris entre 3 et 4 g/10 mn et de densité égale à 0,935 g/cm³.

Plus précisément, un mélange à 50 % en poids du premier copolymère et 50 % en poids du second copolymère est plus préféré car ce mélange garantit la maîtrise du dosage à chaque injection et un équilibre optimisé entre la perte de poids et la souplesse pour les tubes de petite taille. Ainsi, un mélange préféré selon l'invention pour obtenir un tube ayant une bonne résistance à la fissuration sous contrainte et une très bonne imperméabilité à la vapeur d'eau avec une souplesse acceptable comprendra un mélange à 50 % en poids de chacun des copolymères d'éthylène-actène cités ci-dessus.

Pour assurer le conditionnement de produits très fortement tensio-actifs, on diminue l'indice de fluidité du matériau dans une limite supérieure ou égale à 3, de préférence 3,5. Il est alors préférable d'utiliser des matériaux constitués d'un mélange de 33 % à 67 % en poids, par rapport au poids total du mélange, d'un copolymère d'éthylène-oléfine linéaire en C₄ à C₁₀ ayant un indice de fluidité compris entre 3 et 4 g/10 mn et une densité égale à 0,935 g/cm³ et de 67 % à 33 % en poids par rapport au poids total du mélange, d'un copolymère d'éthylène-oléfine linéaire en C₄ à C₁₀ ayant un indice de fluidité compris entre 5 et 6 g/10 mn une densité égale à 0,915 g/cm³. Ici également, de préférence, on utilisera des copolymères d'éthylène-octène. En contrepartie de l'effet obtenu, la souplesse de la paroi est atténuée proportionnellement à l'augmentation de son épaisseur.

Le tableau 1 ci-après présente des exemples de mise en oeuvre de l'invention. Ces exemples sont destinés à illustrer l'invention et non à la limiter. En particulier, dans ces exemples, tous les copolymères sont des copolymères d'éthylène-octène ou des copolymères d'Ethylène Butène ou hexène. Cependant, des essais ont été effectués avec des copolymères d'éthylène-oléfine linéaire en C₄ à C₁₀ pour donner des résultats similaires, les propriétés de souplesse, de résistance à la fissuration sous contrainte et de barrière à la vapeur d'eau étant modulées de la même façon en fonction de l'indice de fluidité et de la densité du matériau, ainsi que de l'épaisseur de la paroi.

Les caractéristiques et proportions des copolymères utilisés sont reportées au Tableau 1 ci-après et également en figure 1.

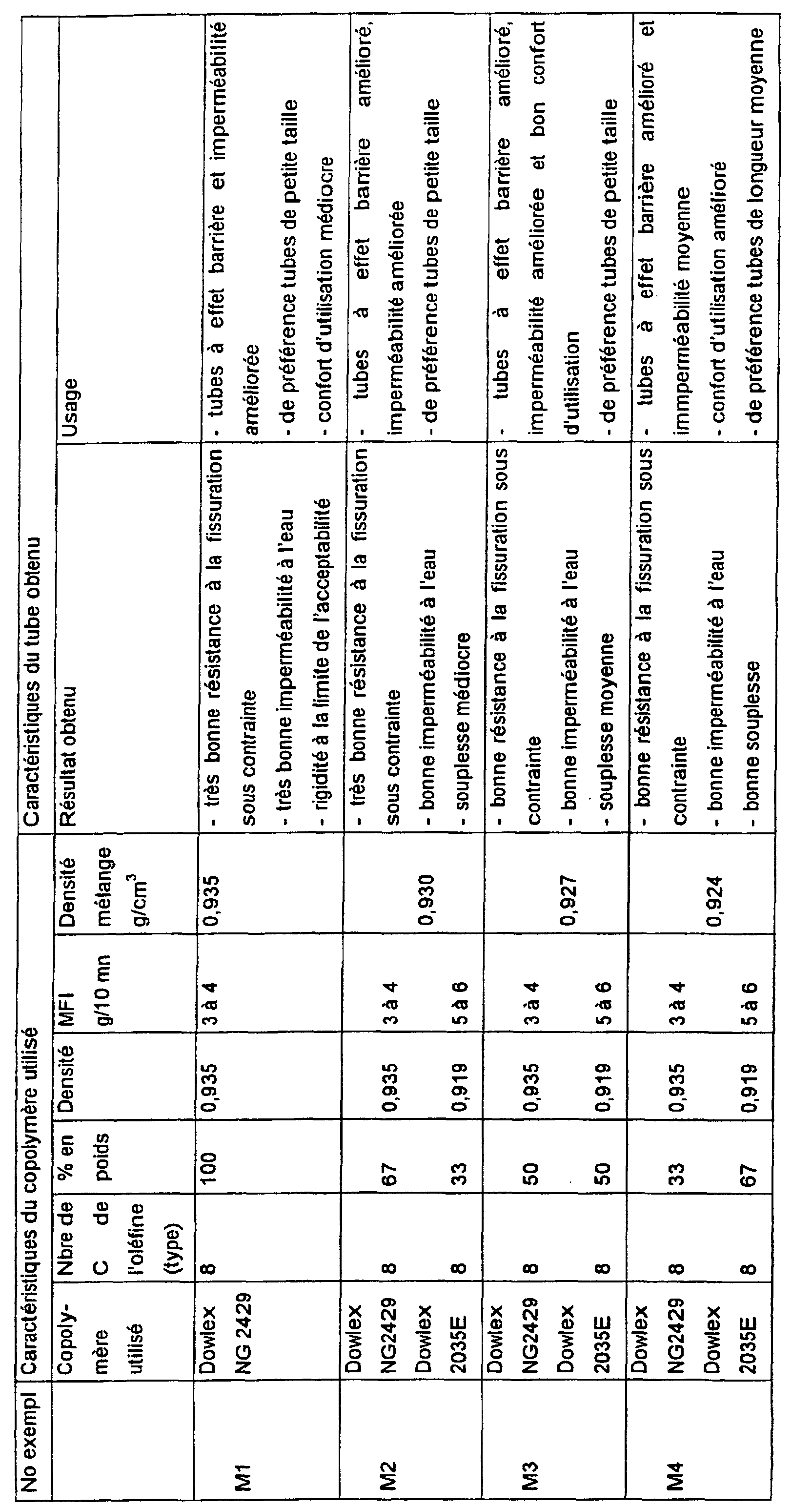

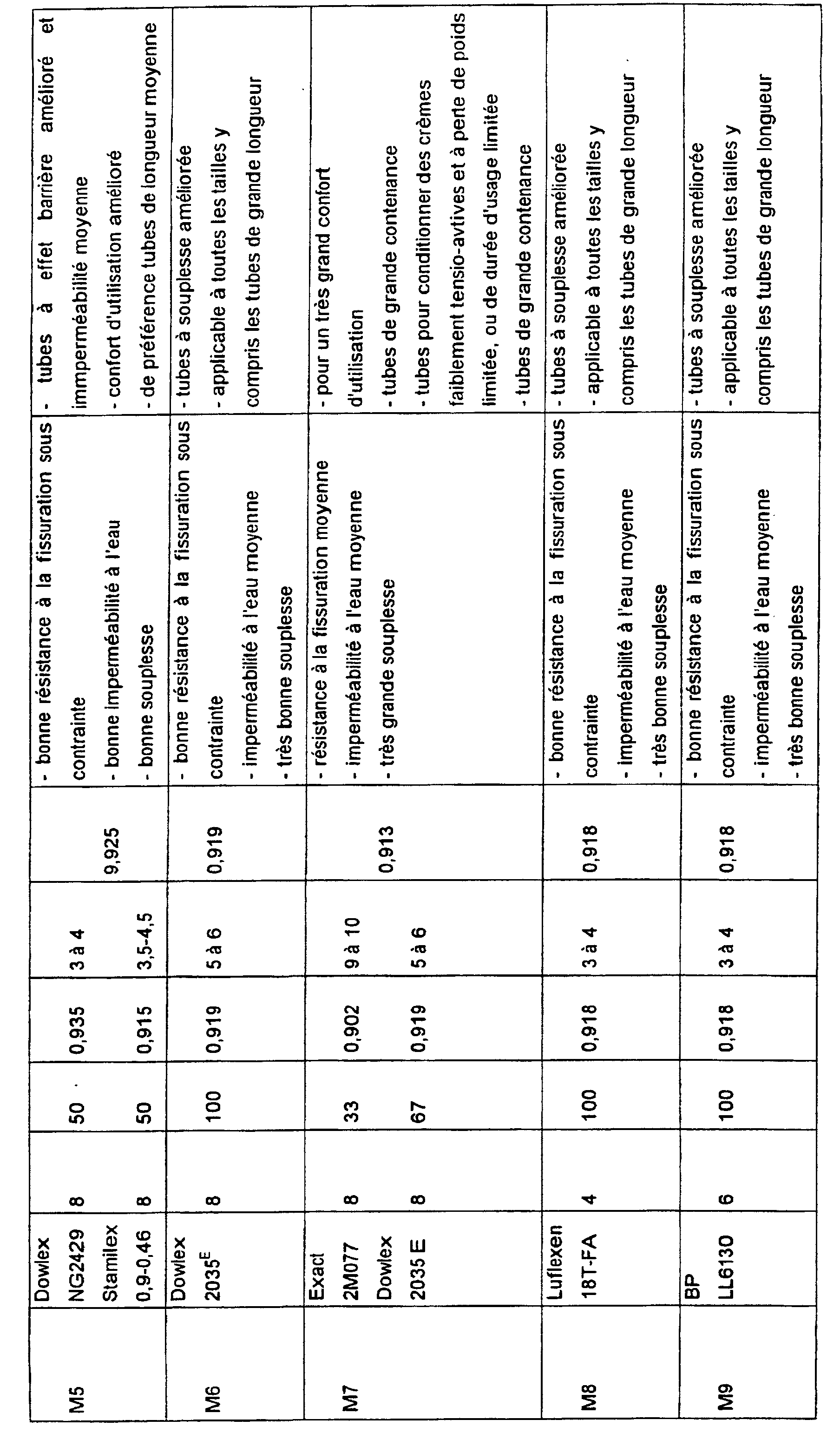

Ainsi, comme on le voit de ce qui précède, on a maintenant trouvé un matériau qui permet de fabriquer des tubes ayant une souplesse, une imperméabilité à la vapeur d'eau, une résistance à la fissuration sous contrainte, parfaitement adaptées en faisant varier différents paramètres tels que l'indice de fluidité du matériau utilisé et sa densité, l'épaisseur de la paroi devant de plus varier selon la longueur du tube. Les matériaux utilisés dans l'extrusion ne sont pas injectables en raison d'un indice de fluidité trop faible, pour les longueurs de jupe imposées par le volume du tube et dans les épaisseurs de paroi retenues dans ce procédé pour obtenir simultanément la souplesse de paroi et l'imperméabilité à la vapeur d'eau demandées.

A l'inverse, les matériaux de l'invention sont injectables , la tête et la jupe étant injectées en une seule opération, en mettant en oeuvre des conditions de pression d'injection extrêmes permettant d'injecter des matériaux à forte viscosité dans des parois minces. Les pressions d'injection habituelles sont de l'ordre de 450 à 600 bars. Or, pour les matériaux à forte viscosité utilisés dans l'invention, les pressions d'injection utilisées sont de l'ordre de 1250 à 2500 bars selon la longueur de la jupe, l'épaisseur de la jupe et la viscosité du matériau injecté.

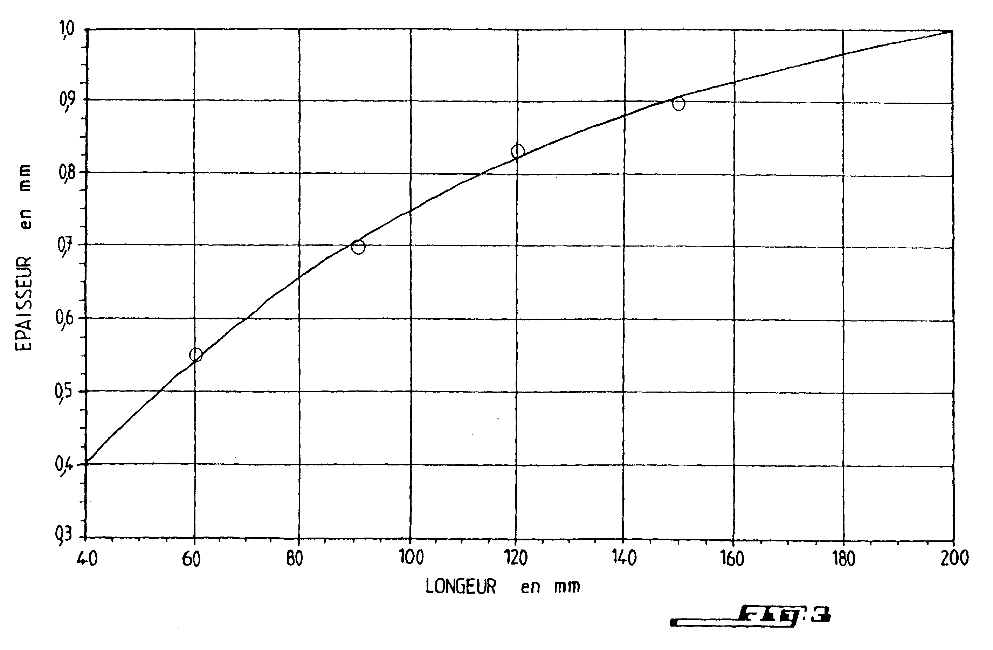

Dans l'art antérieur, le tube est injecté dans un moule tel que représenté en figure 4 et composé d'un noyau noté 4 dans la figure 4, d'une empreinte notée 5 dans la figure 4 et d'un reçu de buse noté 6 dans la figure 4 dans lequel s'inscrit la buse d'injection notée 7 en figure 4 c'est-à-dire le canal par lequel le matériau plastique en fusion est conduit dans la cavité définie par le reçu de buse, l'empreinte et le noyau. Sous l'effet de la pression d'injection très élevée nécessaire pour injecter le matériau dans les épaisseurs de paroi requises pour la souplesse de tube, le noyau a tendance à fléchir vers l'empreinte. Il en résulte une paroi d'épaisseur variable et donc de souplesse variable. De façon beaucoup plus grave, le décentrage du noyau génère des flots préférentiels de matière lors de l'injection de la jupe, flots préférentiels qui se rejoignent en "lignes de soudure", ces "lignes de soudure" formant des zones de non résistance à la fissuration sous contrainte.

Il est donc très important que la paroi du tube soit d'épaisseur constante, sans renfort de toute matière, y compris longitudinal, pour préserver à la fois le confort d'utilisation ainsi que la résistance au stress cracking.

Un premier moule d'injection pour obtenir ce résultat est celui du type représenté en figure 5. Comme on le voit en figure 5, ce moule comporte une partie centrale notée 8. La partie centrale 8 du noyau 4 a une extrémité libre notée 9 en figure 5 qui est en appui de centrage sur le reçu de buse 6.

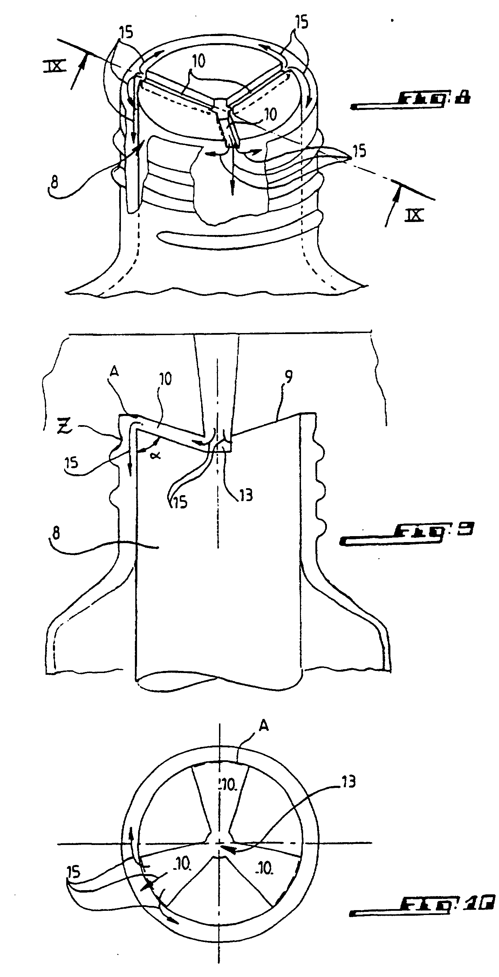

Pour procéder à l'injection du matériau depuis le point d'injection central 13 jusqu'à la tête du tube, on crée des canaux d'alimentation radiaux dans l'extrémité libre 9 du noyau central 8. Les canaux d'alimentation notés 10 sont plus clairement visibles en figure 7, qui est une vue agrandie de la partie notée VII en figure 5.

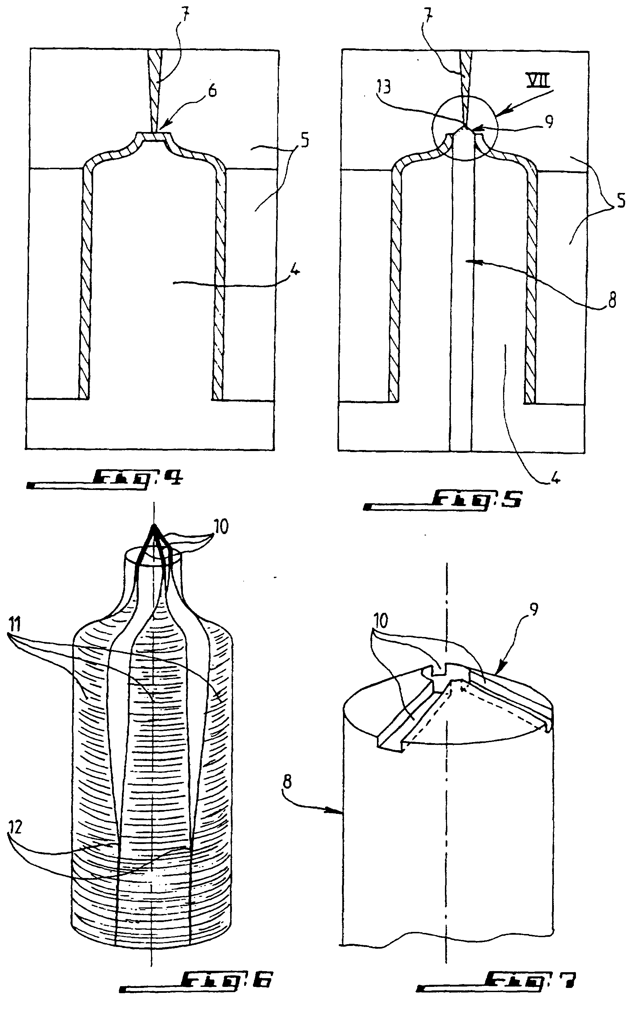

Cependant, la mise en oeuvre de cette technique présente l'inconvénient de créer autant de points d'alimentation de la jupe que de canaux d'alimentation entre le point d'injection et la tête du tube. En effet, comme représenté en figure 6, à partir des trois canaux 10 on crée trois flots d'alimentation indépendants de la jupe, qui génèrent la création de trois nappes notées 11 en figure 6 de matière indépendantes sur la jupe, reliées par trois lignes de soudure notées 12 en figure 6.

Ces lignes de soudure présentent le grave inconvénient de créer des zones de non résistance à la fissuration sous contrainte de la jupe. De plus, ces lignes de soudure peuvent éventuellement faire apparaître des facettes sur la jupe qui modifient la forme originale du tube, dégradent son aspect et dans certains cas peuvent induire des défauts lors de la pose du décor ( sérigraphie, étiquette, marquage à chaud), et donc dégrader l'aspect de ce décor.

Pour pallier ces inconvénients, l'invention propose également un procédé qui permet d'atténuer considérablement les lignes de soudure tout en conservant l'appui indispensable du noyau sur le reçu de buse.

Ce procédé et ce moule seront maintenant décrits en référence aux figures 8 et 9. Comme représenté en figures 8 et 9, ce procédé consiste à placer le point d'injection noté 13 dans un plan situé en dessous de la partie supérieure de la tête du tube au point de raccord A entre les canaux d'alimentation 10 et la tête du tube.

En plaçant le point d'injection 13 dans un plan situé en dessous de la partie au sommet de la tête du tube au point de raccord A entre les canaux d'alimentation 10 et la tête du tube, le flot de matériau injecté parcourt un chemin caractérisé par un angle, noté α en figure 9, inférieur à 90°.

Le matériau injecté vient donc percuter le flanc (vertical sur la figure 9) de la partie supérieure de la tête du tube, qui constitue un anneau circulaire continu, ce qui favorise à partir du point de raccord A un parcours d'écoulement circulaire, représenté par les flèches 15 en figure 8 et en figure 10, ce qui permet la reconstitution d'un flot annulaire de la matière injectée et atténue considérablement la création des lignes de soudure sur la jupe. Ainsi, un moule pour mettre en oeuvre le procédé de l'invention comprendra une empreinte 5 , un noyau fixe 4 comprenant une partie centrale 8 dont la partie supérieure libre 9 est en forme de cône rentrant par rapport au noyau.

Afin de faciliter la reconstitution d'un flot de matière circulaire à partir des points de raccord entre les canaux radiaux d'injection et la partie supérieure de la tête du tube, on a intérêt à constituer une ligne de raccord aussi large que possible entre chaque canal radial d'injection et la partie supérieure de la tête du tube conformément à la figure 10.

Une solution avantageuse consiste à prévoir des largeurs de raccordement cumulées des canaux d'alimentation au point de raccord A avec la paroi supérieure de la tête du tube représentant au moins 15% du périmètre de la partie supérieure de la tête du tube.

Une autre solution améliorant encore l'alimentation annulaire, mais réduisant la surface d'appui du noyau sur le reçu de buse consiste à porter les largeurs cumulées de raccordement des canaux d'alimentation au point de raccord avec la tête du tube à plus de 25% du périmètre de la partie supérieure de la tête.

Afin de conserver une surface maximum d'appui du noyau sur le reçu de buse tout en maximisant les largeurs cumulées de raccordement A des canaux radiaux d'alimentation 10 avec la tête du tube il est avantageux de donner aux canaux radiaux une largeur croissante, depuis le point d'injection 13 jusqu'au point de raccord A avec la tête du tube, comme montré en figure 10.

Par ailleurs, toujours afin de favoriser la reconstitution d'un flux annulaire de matière, il est avantageux de prévoir une zone d'étranglement annulaire Z constituée sur le flanc vertical de l'embout, à l'entrée de la partie supérieure de la tête du tube, après la zone de raccord avec les canaux radiaux d'alimentation.

La zone d'étranglement annulaire constituée à l'entrée de la partie supérieure de la tête du tube après le point de raccord A du canal radial et de la paroi du tube renforce l'effet de diffusion annulaire du flot de matière dessiné sur la figure 10.

Dans la mesure où l'étranglement ne joue aucun rôle dans le centrage du noyau sur l'empreinte, où il faut affecter toute la surface très petite de l'extémité de l'embout au courant d'alimentation ainsi qu'aux zones d'appui du noyau sur le moule, et où enfin il faut éviter toute perte de charge avant la constitution du flot annulaire sur le flanc vertical de l'embout, il est très important de ne pas disposer la zone d'étranglement sur le dessus, c'est-à-dire sur la cuvette elle-même.

De plus, pour éviter toute déchirure manuelle, mécanique ou par stress cracking, et pour éviter toute perte de charge, la zone d'étranglement doit être suffisamment épaisse, d'une épaisseur au minimum supérieure à l'épaisseur de paroi de la jupe du tube.

Enfin, le noyau central 8 peut être rendu mobile dans le noyau 4. Cette disposition est avantageusement retenue lorsque l'on ne souhaite pas rapporter un embout "réducteur" sur le tube, lequel réducteur est alors constitué de la paroi sommitale de la tête du tube. Cette paroi est injectée consécutivement à l'injection de la jupe et sans interruption, après recul du noyau central proportionnellement à l'épaisseur de paroi voulue du réducteur. On dispose après cette opération d'un tube monobloc injecté en une seule opération, le réducteur étant réalisé en forme de cuvette, la partie supérieure libre 9 de la partie centrale 8 du noyau étant dessinée en forme de cône rentrant, la cuvette disposant d'une surface externe parftaitement lisse jusqu'au rebord du flanc vertical de l'embout, l'empreinte étant dessinée sans aspérité radiale, ni aspérité circulaire, et les canaux d'alimentation étant dessinés en creux dans la partie mobile du noyau selon la figure 7.

La cuvette bouchant hermétiquement le tube, le trou d'ouverture est obtenu par perforation a posteriori, le diamètre du trou étant modulé à la dimension souhaitée, compte tenu de la crème contenue dans le tube.

Bien entendu, bien que l'invention ait été décrite pour l'injection des matériaux particuliers décrits ici par le procédé et avec le moule d'injection décrits ici, il apparaîtra clairement à l'homme de l'art que le tube souple obtenu par injection d'un copolymère d'éthylène-oléfine linéaire en C₄ à C₁₀ pourra être obtenu par d'autres procédés et restera dans le cadre de l'invention telle que définie dans les revendications. De la même façon, le procédé et le moule d'injection décrits ici pourront être utilisés pour injecter d'autres matériaux visqueux que ceux décrits ici.

Ainsi, l'invention n'est nullement limitée aux modes de réalisation décrits et illustrés dans la description qui précède et couvre tous les modes de réalisation tombant dans l'étendue de l'invention telle que définie dans les revendications annexées.
¹ Anmerkung d. Übers.: Bitte prüfen, ob der Index 8 oder eine andere Zahl ist (schlechte Lesbarkeit der Vorlage).

## Revendications

1. Tube constitué d'une jupe et d'une tête de distribution
- dont la paroi est en un copolymère d'éthylène-oléfine linéaire en C_{4 à 10} ou en un mélange de copolymères d'éthylène-oléfine linéaire en C_{4 à 10} ayant un indice de fluidité (MFI) mesuré selon la norme ISO 1133 compris entre 3 et 10 g/10 mn, de préférence compris entre 3,5 et 9 g/10 mn inclus et une densité comprise entre 0,880 g/cm³ et 0,935 g/cm³ inclus, de préférence comprise entre 0,900 et 0.930 g/cm³ inclus,
- dont la jupe a une épaisseur de paroi à mi-hauteur comprise entre 0,30 et 1,00 mm inclus, de préférence entre 0,35 et 0,95 mm inclus et une longueur comprise entre 40 et 200 mm inclus,
et dont
- la jupe et la tête de distribution sont fabriquées en une seule opération d'injection dans un moule d'injection, comprenant une empreinte (5) et un noyau (4) **caractérisé en ce que** ledit noyau comprend une partie centrale (8) dont l'extrémité supérieure libre (9) est en appui de centrage sur l'empreinte (5) pendant la phase d'injection du tube,
ce dont il résulte que le tube est souple, résistant à la fissuration sous contrainte et imperméable à la vapeur d'eau.

2. Tube selon la revendication 1, **caractérisé en ce que** le mélange de copolymères d'éthylène-oléfine linéaire en C_{4 à 10} est soit un mélange de copolymères d'éthylène-oléfine linéaire en C_{4 à 5} soit un mélange de copolymères d'éthylène-oléfine linéaire en C_{8 à 10}

3. Tube selon ta revendication 1 ou 2, **caractérisé en ce que** le(s) copolymère(s) d'éthylène-oléfine finéaire en C_{4 à 10} est(sont) un(des) copolymère(s) d'éthylène-octène.

4. Tube selon l'une quelconque des revendications précédentes, **caractérisé en ce que** l'extrémité supérleure libre (9) du noyau (4) comporte des canaux d'alimentation (10).

5. Tube selon la revendication 4, **caractérisé en ce que** laditeextrémité (9) est en forme de cône rentrant et **en ce que** les angles ∝ entre les canaux (10) et l'axe vertical de l'empreinte (5) sont inférieurs à 90°.

6. Tube selon l'une quelconque des revendications 4 ou 5, **caractérisé en ce que** les largeurs cumulées des canaux (10) à leurs zones de raccord (A) avec l'embout de la tête du tube représentent au moins 15%, de préférence plus de 25%, du périmètre de cet embout.

7. Tube selon l'une quelconque des revendications 4 à 6, **caractérisé en ce que** les canaux (10) ont une largeur qui croit depuis le point d'injection (13) suivant une direction radiale centrifuge jusqu'à leurs points de raccord (A) avec l'embout de la tête du tube.

8. Tube selon l'une quelconque des revendications 4 à 7, **caractérisé en ce que** l'embout de ta tête de distribution a une zone d'étranglement annulaire au delà de la zone de raccord (A) des canaux (10) avec l'embout de la tête du tube.

9. Tube salon l'une quelconque des revendications précédentes, **caractérisé en ce que** la partie centrale (8) du noyau du moule d'injection est mobile, et **en ce que** la paroi supérieure de la tête du tube est injectée après recul de la partie mobile (8) d'une distance proportionnelle à l'épaisseur de paroi voulue.

10. Tube selon l'une quelconque des revendications précédentes, **caractérisé en ce que** l'indice de fluidité du copolymère ou du mélange de copolymères d'éthylène-oléfine en C_{4 à 10} est compris entre 5 et 10 g/10 mn inclus, de préférence entre 5 et 9 g/10 mn inclus et **en ce que** l'épaisseur de la paroi à mi-hauteur de la jupe est située sur la courbe représentée en figure 2, en fonction de la longueur de la jupe, à + ou - 0,05 mm près,
pour obtenir un tube à souplesse améliorée.

11. Tube selon l'une quelconque des revendications 1 à 9, **caractérisé en ce que** l'indice de fluidité du copolymère ou du mélange de copolymères d'éthylène-oléfine en C_{4 à 10} est compris entre 3 et 6,5 g/10 mn inclus de préférence entre 3,5 et 6,5 g/10 mn inclus et **en ce que** l'épaisseur de la paroi à mi-hauteur de la jupe est située sur la courbe représentée en figure 3, en fonction de la longueur de ta jupe, à + ou - 0,05 mm près.
pour obtenir un tube à résistance à la fissuration sous contrainte améliorée,en particulier en présence de produits tensio-actifs.

12. Tube selon l'une quelconque des revendications précédentes,
**caractérisé en ce que** la densité du copolymère ou du mélange de copolymères d'éthylène-oléfine linéaire en C_{4 à 10} est comprise entre 0,880 et 0,920 g/cm³ inclus, de préférence comprise entre 0,900 et 0,920 g/cm³ inclus,
pour obtenir un tube à souplesse améliorée.

13. Tube selon la revendication 12, **caractérisé en ce que** la jupe a une longueur supérieure ou égale à 75mm.

14. Tube selon la revendication 10 ou la revendication 12, **caractérisé en ce que** l'indice de fluidité du copolymère ou du mélange de copolymères d'éthylène-oléfine linéaire en C_{4 à 10} est compris entre 5 et 10 g/10 mn, de préférence compris entre 5 et 9 g/10 mn Inclus et **en ce que** la densité du copolymère ou du mélange de copolymères d'éthylène-oléfine linéaire en C_{4 à} 10 est comprise entre 0,900 et 0,920 g/cm³ inclus.

15. Tube selon la revendication 12, **caractérisé en ce que** sa paroi est en un copolymère d'éthylène-octène ayant un indice de fluidité compris entre 5 et 6 g/10 mn inclus et une densité égale à 0,919 g/cm³.

16. Tube selon l'une quelconque des revendications 1 à 11, **caractérisé en ce que** la densité du copolymère ou du mélange de copolymères d'éthylène-oléfine linéaire en C_{4 à 10} est comprise
- entre 0,925 et 0,935 g/cm³ inclus pour une épaisseur de la paroi à mi-hauteur de la jupe voisine de 0,45 mm,
- entre 0,920 et 0,930 g/cm³ inclus pour une épaisseur de la parol à mi-hauteur de la jupe voisine de 0,60 mm,
- entre 0,915 et 0,925 g/cm³ inclus pour une épaisseur de la paroi à mi-hauteur de la jupe voisine de 0,75 mm,
pour obtenir un tube à imperméabilité à la vapeur d'eau renforcée et à souplesse optimisée en fonction de l'épaisseur de la paroi à mi-hauteur et de la longueur de la jupe.

17. Tube selon la revendication 16, **caractérisé en ce que** sa paroi est en un mélange de :
a) 33% à 67% en poids, par rapport au poids total du mélange, d'un copolymère d'éthylène-oléfine linéaire en C_{4 à 10} ayant une densité comprise entre 0,900 et 0,920 g/cm³ inclus, et,
b) 67% à 33% en poids par rapport au poids total du mélange, d'un copolymère d'éthylène-oléfine linéaire en C_{4 à 10} ayant une densité comprise entre 0,920 et 0.935 g/cm³ inclus.

18. Tube selon la revendication 17, **caractérisé en ce que** sa paroi est en un mélange de :
a) 33% à 67% en poids, par rapport au poids total du mélange, d'un copolymère d'éthylène-octène ayant un indice de fluidité compris entre 3 et 6,5 g/10 mn inclus et une densité comprise entre 0,900 et 0,920 g/cm³ inclus, et,
b) 67% à 33% en poids par rapport au poids total du mélange, d'un copolymère d'éthylène-octène ayant un indice de fluidité compris entre 3 et 6,5 g/10 mn inclus et une densité comprise entre 0,920 et 0,935 g/cm³ inclus,
pour obtenir simultanément un tube à fissuration sous contrainte améliorée à imperméabilité à la vapeur d'eau renforcée et souplesse optimisée en fonction de l'épaisseur de la paroi à mi-hauteur et de la longueur de la jupe.

19. Tube selon la revendication 18, **caractérisé en ce que** sa paroi est en un mélange de :
a) 33% à 67% en poids, par rapport au poids total du mélange, d'un copolymère d'éthylène-octène ayant un indice de fluidité compris entre 5 et 6 g/10 mn et une densité égale à 0,919g/cm³, et,
b) 67% à 33% en poids par rapport au poids total du mélange, d'un copolymère d'éthylène-octène ayant un indice de fluidité compris entre 3 et 4 g/10 mn et une densité égale à 0,935g/cm³.

20. Tube selon la revendication 19, **caractérisé en ce que** chaque copolymère d'éthylène-octène représente 50% en poids dudit mélange.

21. Tube selon la revendication 18, **caractérisé en ce que** sa paroi est en un mélange de :
a) 33% à 67% en poids, par rapport au poids total du mélange, d'un copolymère d'éthylène-octène ayant un indice de fluidité compris entre 3 et 5 g/10 mn et une densité égale à 0,915g/cm³, et,
b) 67% à 33% en poids par rapport au poids total du mélange, d'un copolymère d'éthylène-octène ayant un indice de fluidité compris entre 3 et 4 g/10 mn et une densité égale à 0,935g/cm³.

## Patentansprüche

1. Tube, bestehend aus einem Mantel und einem Verteilerkopf,
- deren Wand aus einem Ethylen-C₄₋₁₀-n-Olefin-Copolymer oder einem Ethylen-C₄₋₁₀-n-Olefin-Copolymergemisch besteht, mit einem nach ISO-Norm 1133 gemessenen Schmelzindex (MFI) von 3 bis 10 g/10 min, vorzugsweise von 3,5 bis 9 g/10 min, und einer Dichte von 0,880 bis 0,935 g/cm³, vorzugsweise von 0,900 bis 0, 930 g/cm³,
- deren Mantel in mittlerer Höhe eine Wandstärke von 0,30 bis 1,00 mm, vorzugsweise von 0,35 bis 0,95 mm, und eine Länge von 40 bis 200 mm hat, und
- deren Mantel und Verteilerkopf in einem einzigen Spritzgießvorgang in eine Spritzgießform gefertigt werden, die eine Matrize (5) und einen Kern (4) umfasst, **dadurch gekennzeichnet, dass** der besagte Kern einen Mittelteil (8) umfasst, dessen oberes freies Ende (9) während der Spritzgießphase der Tube zentriert auf der Matrize (5) aufliegt,
woraus sich ergibt, dass die Tube elastisch, unter Beanspruchung rissfest und wasserdampfundurchlässig ist.

2. Tube nach Anspruch 1, **dadurch gekennzeichnet, dass** das Ethylen-C₄₋₁₀-n-Olefin-Copolymergemisch entweder ein Ethylen-C₄₋ ₅-n-Olefin-Copolymergemisch oder ein Ethylen-C₈₋₁₀-n-Olefin-Copolymergemisch¹ ist.

3. Tube nach Anspruch 1 oder 2, **dadurch gekennzeichnet, dass** das/die Ethylen-C₄₋₁₀-n-Olefin-Copolymer/e ein Ethylen-Okten-Copolymer/e ist/sind.

4. Tube nach einem der vorhergehenden Ansprüche, **dadurch gekennzeichnet, dass** das obere freie Ende (9) des Kerns (4) Angussverteiler (10) aufweist.

5. Tube nach Anspruch 4, **dadurch gekennzeichnet, dass** das besagte Ende (9) wie ein einspringender Kegel ausgebildet ist und dadurch, dass die Winkel a zwischen den Verteilern (10) und der Vertikalen der Matrize (5) kleiner als 90° sind.

6. Tube nach einem der Ansprüche 4 oder 5, **dadurch gekennzeichnet, dass** die kumulierten Breiten der Verteiler (10) in Höhe der Verbindungszonen (A) mit dem Ansatz des Tubenkopfes mindestens 15 %, vorzugsweise mehr als 25 % des Umfangs dieses Ansatzes betragen.

7. Tube nach einem der Ansprüche 4 bis 6, **dadurch gekennzeichnet, dass** die Verteiler (10) eine Breite haben, die ab dem Spritzgießpunkt (13) in radial-zentrifugaler Richtung bis hin zu den Verbindungspunkten (A) mit dem Ansatz des Tubenkopfes zunimmt.

8. Tube nach einem der Ansprüche 4 bis 7, **dadurch gekennzeichnet, dass** der Ansatz des Verteilerkopfes jenseits der Verbindungszone (A) der Verteiler (10) mit dem Tubenkopfansatz eine ringförmige Verengungszone aufweist.

9. Tube nach einem der vorhergehenden Ansprüche, **dadurch gekennzeichnet, dass** der Mittelteil (8) des Kerns der Spritzgießform beweglich ist, und dadurch, dass die obere Wand des Tubenkopfes eingespritzt wird, nachdem der Mittelteil (8) um eine Strecke zurückgezogen wurde, die sich zur beabsichtigten Wandstärke proportional verhält.

10. Tube nach einem der vorhergehenden Ansprüche, **dadurch gekennzeichnet, dass** der Schmelzindex des Copolymers oder des Ethylen-C₄₋₁₀-Olefin-Copolymergemischs 5 bis 10 g/10 min, vorzugsweise 5 bis 9 g/10 min, beträgt, und dadurch, dass die Wandstärke in halber Höhe des Mantels der in Fig. 2 dargestellten Kurve entspricht, in Abhängigkeit der Länge des Mantels, bei ca. + oder - 0,05 mm,
um eine Tube mit einer verbesserten Elastizität zu erhalten.

11. Tube nach einem der Ansprüche 1 bis 9, **dadurch gekennzeichnet, dass** der Schmelzindex des Copolymers bzw. des Ethylen-C₄₋₁₀-Olefin-Copolymergemischs 3 bis 6,5 g/10 min, vorzugsweise 3,5 bis 6,5 g/10 min beträgt, und dadurch, dass die Wandstärke in halber Höhe des Mantels der in Fig. 3 dargestellten Kurve entspricht, in Abhängigkeit der Länge des Mantels, bei ca. + oder - 0,05 mm,
um eine Tube mit einer verbesserten Rissbeständigkeit unter Beanspruchung, insbesondere bei Anwesenheit von oberflächenaktiven Stoffen, zu erhalten.

12. Tube nach einem der vorhergehenden Ansprüche, **dadurch gekennzeichnet, dass** die Dichte des Copolymers bzw. des Ethylen-C₄₋₁₀-n-Olefin-Copolymergemischs 0,880 bis 0,920 g/cm³, vorzugsweise 0,900 bis 0,920 g/cm³, beträgt,
um eine Tube mit einer verbesserten Elastizität zu erhalten.

13. Tube nach Anspruch 12, **dadurch gekennzeichnet, dass** der Mantel eine Länge von über oder gleich 75 mm hat.

14. Tube nach Anspruch 10 oder 12, **dadurch gekennzeichnet, dass** der Schmelzindex des Copolymers bzw. des Ethylen-C₄₋₁₀-n-Olefin-Copolymergemischs 5 bis 10 g/min, vorzugsweise 5 bis 9 g/10 min, beträgt, und dadurch, dass die Dichte des Copolymers bzw. des Ethylen-C₄₋₁₀-n-Olefin-Copolymergemischs 0,900 bis 0,920 g/cm³ beträgt.

15. Tube nach Anspruch 12, **dadurch gekennzeichnet, dass** ihre Wand aus einem Ethylen-Okten-Copolymer mit einem Schmelzindex von 5 bis 6 g/10 min und einer Dichte von gleich 0,919 g/cm³ besteht.

16. Tube nach einem der vorhergehenden Ansprüche 1 bis 11, **dadurch gekennzeichnet, dass** die Dichte des Copolymers bzw. des Ethylen-C₄₋₁₀-n-Olefin-Copolymergemischs beträgt:
- 0,925 bis 0,935 g/cm³ bei einer Wandstärke in halber Höhe des Mantels von ca. 0,45 mm.
- 0,920 bis 0,930 g/cm³ bei einer Wandstärke in halber Höhe des Mantels von ca. 0,60 mm,
- 0,915 bis 0,925 g/cm³ bei einer Wandstärke in halber Höhe des Mantels von ca. 0,75 mm,
um in Abhängigkeit von der Wandstärke in halber Höhe und der Länge des Mantels eine Tube mit verstärkter Wasserdampfdichte und optimierter Elastizität zu erhalten.

17. Tube nach Anspruch 16, **dadurch gekennzeichnet, dass** ihre Wand ein Gemisch ist aus:
a) 33 bis 67 Massenanteilen im Verhältnis zum Gesamtgewicht eines Ethylen-C₄₋₁₀-n-Olefin-Copolymergemischs mit einer Dichte von 0,900 bis 0,920 g/cm³, und
b) 67 bis 33 Massenanteilen im Verhältnis zum Gesamtgewicht eines Ethylen-C₄₋₁₀-n-Olefin-Copolymergemischs mit einer Dichte von 0,920 bis 0,935 g/cm³.

18. Tube nach Anspruch 17, **dadurch gekennzeichnet, dass** ihre Wand ein Gemisch ist aus:
a) 33 bis 67 Massenanteilen im Verhältnis zum Gesamtgewicht des Gemischs eines Ethylen-Okten-Copolymers mit einem Schmelzindex von 3 bis 6,5 g/10 min und einer Dichte von 0,900 bis 0,920 g/cm³, und
b) 67 bis 33 Massenanteilen im Verhältnis zum Gesamtgewicht des Gemischs eines Ethylen-Okten-Copolymers mit einem Schmelzindex von 3 bis 6,5 g/10 min und einer Dichte von 0, 920 bis 0, 935 g/cm³,
um in Abhängigkeit von der Wandstärke in halber Höhe und der Länge des Mantels eine Tube mit verbesserter Rissbeständigkeit unter Beanspruchung, verstärkter Wasserdampfdichte und optimierter Elastizität zu erhalten.

19. Tube nach Anspruch 18, **dadurch gekennzeichnet, dass** ihre Wand ein Gemisch ist aus:
a) 33 bis 67 Massenanteilen im Verhältnis zum Gesamtgewicht des Gemischs eines Ethylen-Okten-Copolymers mit einem Schmelzindex von 5 bis 6 g/10 min und einer Dichte von gleich 0,919 g/cm³, und
b) 67 bis 33 Massenanteilen im Verhältnis zum Gesamtgewicht des Gemischs eines Ethylen-Okten-Copolymers mit einem Schmelzindex von 3 bis 4 g/10 min und einer Dichte von gleich 0,935 g/cm³.

20. Tube nach Anspruch 19, **dadurch gekennzeichnet, dass** jedes Ethylen-Okten-Copolymer 50 Massenanteile des besagten Gemischs darstellt.

21. Tube nach Anspruch 18, **dadurch gekennzeichnet, dass** ihre Wand ein Gemisch ist aus:
a) 33 bis 67 Massenanteilen im Verhältnis zum Gesamtgewicht des Gemischs eines Ethylen-Okten-Copolymers mit einem Schmelzindex von 3 bis 5 g/10 min und einer Dichte von gleich 0, 915 g/cm³, und
b) 67 bis 33 Massenanteilen im Verhältnis zum Gesamtgewicht des Gemischs eines Ethylen-Okten-Copolymers mit einem Schmelzindex von 3 bis 4 g/10 min und einer Dichte von gleich 0,935 g/cm³.

## Claims

1. Tube consisting of a skirt and a dispenser head:
- whose wall is in a C₄ to ₁₀ linear ethylene-olefin copolymer, or a mixture of C_{4 to C10} linear ethylene-olefin copolymers, having a fluidity index (MFI) measured in accordance with standard ISO 1133 lying between 3 and 10 g/10 mn, preferably between 3.5 and 9 g/10 mn inclusive, and a density of between 0.880 g/cm³ and 0.935 g/cm³ inclusive, preferably between 0.900 and 0.930 g/cm³ inclusive,
- whose skirt has a wall thickness at mid-height of between 0.30 and 1.00 mm inclusive, preferably between 0.35 and 0.95 mm inclusive and a length of between 40 and 200 mm inclusive, and:
- whose skirt and dispenser head are made in a single injection operation in an injection mould, comprising an impression (5) and a core (4), **characterized in that** said core comprises a central part (8) whose free upper end (9) centre bears upon impression (5) during the tube injection phase, from which it arises that the tube is flexible, resists fissuring under stress and is impervious to water vapour.

2. Tube according to claim 1, **characterized in that** the mixture of C_{4 to 10} linear ethylene-olefin copolymers is either a mixture of C_{4 to 6} linear ethylene - olefin copolymers, or a mixture of C_{6 to 10} linear ethylene-olefin copolymers.

3. Tube according to claim 1 or 2, **characterized in that** the C_{4 to 10} linear ethylene-olefin copolymer(s) is(are) ethylene-octene copolymer(s).

4. Tube according to any of the preceding claims **characterized in that** the free upper end (9) of core (4) contains supply channels (10).

5. Tube according to claim 4, **characterized in that** said end (9) has a tapered cone shape and **in that** the angles α between channels (10) and the vertical axis of impression (5) are less than 90°.

6. Tube according to either of claims 4 or 5, **characterized in that** the accumulated widths of channels (10) at their connection zones (A) with the nozzle of the tube head represent at least 15 %, preferably more than 25 % of the perimeter of this nozzle.

7. Tube according to any of claims 4 to 6, **characterized in that** channels (10) are of increasing width from the point of injection (13) along a centrifugal radial direction as far as the points of connection (A) with the nozzle of the tube head.

8. Tube according to any of claims 4 to 7, **characterized in that** the nozzle of the dispenser head has a ring-shaped throttle zone beyond the connection zone (A) of channels (10) with the nozzle of the tube head.

9. Tube according to any of the preceding claims, **characterized in that** the central part (8) of the core of the injection mould is mobile, and **in that** the upper wall of the tube head is injected after retracting the mobile part (8) over a distance proportional to the desired wall thickness.

10. Tube according to any of the preceding claims, **characterized in that** the fluidity index of the copolymer or mixture of C_{4 to C10} linear ethylene-olefin copolymers lies between 5 and 10 g/10 mn inclusive, preferably between 5 and 9 g/10 mn inclusive, and **in that** the wall thickness at skirt mid-height is located on the curve shown in figure 2, in relation to skirt length, to within ± 0.05 mm to obtain a tube with improved flexibility.

11. Tube according to any of claims 1 to 9, **characterized in that** the fluidity index of the copolymer or mixture of C_{4 to C10} linear ethylene-olefin copolymers lies between 3 and 6.5 g/10 mn inclusive, preferably between 3.5 and 6.5 g/10 mn inclusive, and **in that** the wall thickness at skirt mid-height is located on the curve shown in figure 3, in relation to skirt length, to within ± 0.05 mm,
to obtain a tube which has improved resistance to fissuring under stress in particular in the presence of surfactants.

12. Tube according to any of the preceding claims, **characterized in that** the density of the copolymer or mixture of C_{4 to C10} linear ethylene-olefin copolymers lies between 0.880 and 0.920 g/cm³ inclusive, preferably between 0.900 and 0.920 g/cm³ inclusive,
to obtain a tube with improved flexibility.

13. Tube according to claim 12, **characterized in that** the length of the skirt is 75 mm or more.

14. Tube according to claim 10 or claim 12, **characterized in that** the fluidity index of the copolymer or mixture of C_{4 to C10} linear ethylene-olefin copolymers lies between 5 and 10 g/10 mn, preferably between 5 and 9 g/10 mn inclusive, and **in that** the density of the copolymer or mixture of C_{4 to C10} linear ethylene-olefin copolymers lies between 0.900 and 0.920 g/cm³ inclusive.

15. Tube according to claim 12, **characterized in that** its wall is in an ethylene-octene copolymer having a fluidity index of between 5 and 6 g/10 mn inclusive and a density of 0.919 g/cm³.

16. Tube according to any of claims 1 to 11, **characterized in that** the density of the copolymer or mixture of C_{4 to C10} linear ethylene-olefin copolymers lies:
- between 0.925 and 0.935 g/cm³ inclusive for a wall thickness at skirt mid-height in the region of 0.45 mm,
- between 0.920 and 0.930 g/cm³ inclusive for a wall thickness at skirt mid-height in the region of 0.60 mm,
- between 0.915 and 0.925 g/cm³ inclusive for a wall thickness at skirt mid-height in the region of 0.75 mm, to obtain a tube with increased imperviousness to water vapour and optimised flexibility in relation to wall thickness at skirt mid-height and to skirt length.

17. Tube according to claim 16, **characterized in that** its wall is a mixture of:
a) 33 % to 67 % by weight, relative to the total weight of the mixture, of a C_{4 to C10} linear ethylene-olefin copolymer having a density of between 0.900 and 0.920 g/cm³ inclusive, and
b) 67 % to 33 % by weight, relative to the total weight of the mixture, of a C_{4 to C10} linear ethylene-olefin copolymer having a density of between 0.920 and 0.935 g/cm³ inclusive.

18. Tube according to claim 17, **characterized in that** its wall is a mixture of:
a) 33 % to 67 % by weight, relative to the total weight of the mixture, of an ethylene-octene copolymer having a fluidity index of between 3 and 6.5 g/10 mn inclusive and a density of between 0.900 and 0.920 g/cm³ inclusive, and
b) 67 % to 33 % by weight, relative to the total weight of the mixture, of an ethylene-octene copolymer having a fluidity index of between 3 and 6.5 g/10 mn inclusive and a density of between 0.920 and 0.935 g/cm³ inclusive, to obtain simultaneously a tube with improved resistance to fissuring under stress and increased imperviousness to water vapour and optimised flexibility in relation to wall thickness at skirt mid-height and in relation to skirt length.

19. Tube according to claim 18, **characterized in that** its wall is a mixture of:
a) 33 % to 67 % by weight, relative to the total weight of the mixture, of an ethylene-octene copolymer having a fluidity index of between 5 and 6 g/10 mn and a density of 0.919 g/cm³, and
b) 67 % to 33 % by weight, relative to the total weight of the mixture, of an ethylene-octene copolymer having a fluidity index of between 3 and 4 g/10 mn and a density of 0.935 g/cm³.

20. Tube according to claim 19, **characterized in that** each ethylene-octene copolymer represents 50 % by weight of said mixture.

21. Tube according to claim 18, **characterized in that** its wall is a mixture of:
a) 33 % to 67 % by weight, relative to the total weight of the mixture, of an ethylene-octene copolymer having a fluidity index of between 3 and 5 g/10 mn and a density of 0.915 g/cm³, and
b) 67 % to 33 % by weight, relative to the total weight of the mixture, of an ethylene-octene copolymer having a fluidity index lying between 3 and 4 g/10 mn and a density of 0.935 g/cm³.
